# EUROPÄISCHE PATENTSCHRIFT

(11) **EP 2 238 071 B1**
(45) Veröffentlichungstag und Bekanntmachung des Hinweises auf die Patenterteilung: **20.11.2013**
(21) Anmeldenummer: 08872065.1
(22) Anmeldetag: 09.12.2008
(51) Int. Cl.: B66C 23/42, E04G 21/00, B62D 21/18, B62D 61/12, B62D 53/04, F16B 13/00

(54) **FAHRBARE ARBEITSMASCHINE**
WHEELED WORKING MACHINE
ENGIN DE TRAVAIL MOBILE

(30) Priorität: 06.02.2008 DE 102008007918
(43) Veröffentlichungstag der Anmeldung: 13.10.2010
(73) Patentinhaber: Putzmeister Engineering GmbH, 72631 Aichtal (DE)
(72) Erfinder: FÜGEL, Dietmar, 72649 Wolfschlugen (DE)
(74) Vertreter: Wolf, Eckhard
(86) Internationale Anmeldenummer: PCT/EP2008/067055
(87) Internationale Veröffentlichungsnummer: WO 2009/097933

(56) Entgegenhaltungen:
- EP-A- 0 038 954
- EP-A- 0 786 431
- DE-A1- 10 032 622

## Beschreibung

Die Erfindung betrifft eine fahrbare Arbeitsmaschine mit einem als Sattelzug ausgebildeten, eine mehrachsige Zugmaschine und einen mit dieser mittels einer Sattelkupplung verbundene, die Arbeitsmaschine tragenden mehrachsigen Sattelaufleger aufweisenden Fahrgestell, mit einer an dem Sattelaufleger angeordneten, unter Anheben des Sattelzugs auf einem Untergrund abstützbaren Stützkonstruktion, die zwei an am zugmaschinenseitigen Ende des Sattelauflegers zur Fahrgestelllängsachse symmetrisch angeordneten Lagerstellen zwischen einer zur Fahrgestelllängsachse parallelen Transportstellung und mindestens einer Abstützstellung mittels eines Betätigungsmechanismus verschwenkbare vordere Stützausleger und zwei zwischen einer Transportstellung und mindestens einer Abstützstellung verstellbare rückwärtige Stützausleger aufweist, wobei der Sattelaufleger Mittel zum Anheben und/oder Festhalten der Zugmaschine aufweist.

Es ist eine als Autobetonpumpe ausgebildete fahrbare Arbeitsmaschine dieser Art bekannt (EP 0 038 954 B1), bei der die Stützausleger der Stützkonstruktion seitlich am Sattelaufleger so schwenkbar angeordnet sind, dass sie von einer Transportstellung in eine Abstützstellung ausschwenkbar und gegebenenfalls teleskopierbar sind. Ein Riegel sorgt dafür, dass sowohl eine vertikale als auch eine horizontale Kraftübertragung über die Sattelkupplung möglich ist und dass die Zugmaschine dennoch um die vertikale Achse eines Königszapfens gegenüber dem Sattelaufleger verschwenkt werden kann. Ein zusätzlich an der Sattelkupplung vorgesehenes Drehlager erlaubt eine Nickbewegung der Zugmaschine um eine horizontale Querachse gegenüber dem Sattelaufleger. Um die Zugmaschine in der angehobenen Stellung des Fahrgestells als Ballastgewicht zur Stabilisierung des mit den Stützauslegern auf dem Boden abgestützten Sattelauflegers nutzen zu können, sind am feststehenden Teil des Sattelanhängers Mittel zum Anheben der Zugmaschine und deren Festhalten in der angehobenen Stellung vorgesehen, die dort einen mittels eines Hydrozylinders verschwenkbaren Hebel sowie ein zwischen dem Hebel und der Zugmaschine angeordnetes biegeschlaffes Zugorgan aufweisen.

Der Erfindung liegt die Aufgabe zugrunde, eine fahrbare Arbeitsmaschine mit einem als Sattelzug ausgebildeten Fahrgestell der eingangs angegebenen Art dahingehend zu verbessern, dass das An- und Abkuppeln der Zugmaschine am oder vom Sattelaufleger erleichtert wird und der zwischen der Zugmaschine und dem Sattelaufleger zur Verfügung stehende Freiraum optimal zur Unterbringung von Betätigungselementen für die Stützkonstruktion genutzt werden kann.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt die Erkenntnis zugrunde, dass vor allem bei großen Sattelzügen zwischen dem stirnseitigen Ende des Sattelauflegers und dem Fahrerhaus des Sattelzugs ein ausreichend großer Freiraum zur Verfügung steht, der zur Unterbringung wesentlicher Teile des Betätigungsmechanismus für die vorderen Stützausleger ausreicht, so dass sich die Höhe des Sattelauflegers und von dessen Aufbau reduzieren lässt. Dies ist von besonderem Vorteil, wenn im Falle von Autobetonpumpen ein großer Verteilermast mit einer Gesamtlänge von 65 m und mehr auf dem Sattelaufleger untergebracht werden soll. Um dies zu erreichen, wird gemäß der Erfindung vorgeschlagen, dass der Betätigungsmechanismus eines jeden vorderen Stützauslegers eine sich über die Stirnseitenpartie des Sattelauflegers erstreckende, als Hydrozylinder ausgebildete Zylinder-Kolbeneinheit aufweist, die an ihrem einen Ende unmittelbar an einem sattelauflegerfesten Lagerauge und an ihrem anderen Ende mittelbar über ein Umlenkgetriebe am zugehörigen Stützausleger angelenkt ist. Ein weiteres Erfindungsmerkmal besteht darin, dass die den beiden vorderen Stützauslegern zugeordneten Zylinder-Kolbeneinheiten an der Stirnseite des Sattelauflegers nach einander entgegengesetzten Seiten weisend übereinander angeordnet sind.

Da die Zylinder-Kolbeneinheiten an ihren beiden Enden um zur Hochachse parallele Gelenkachsen verschwenkbar sind, greifen sie im Zuge des Ausstellvorgangs der vorderen Stützausleger schräg in den Freiraum zwischen der Stirnseite des Sattelauflegers und dem Fahrerhaus ein. Vorteilhafterweise sind die sattelauflegerfesten Lageraugen der den beiden vorderen Stützauslegern zugeordneten Zylinder-Kolbeneinheiten auf der dem jeweils anderen vorderen Stützausleger zugewandten Seite des Sattelauflegers vorzugsweise in der Nähe der zugehörigen Lagerstelle angeordnet.

Eine bevorzugte Ausgestaltung der Erfindung sieht vor, dass das dem Betätigungsmechanismus eines jeden Stützauslegers zugeordnete Umlenkgetriebe einen mit seinem einen Ende an einem sattelauflegerfesten Gelenk um eine zur Ausstellachse des Stützauslegers parallele Gelenkachse verschwenkbaren Umlenkhebel aufweist, der an seinem anderen Ende Anlenkstellen aufweist, an denen die Zylinder-Kolbeneinheit sowie das eine Ende einer starren Ausstellstange angelenkt sind, wobei die Ausstellstange mit ihrem anderen Ende an einer im Abstand von der Lagerstelle angeordneten Anlenkstelle des Stützauslegers angelenkt ist. Zweckmäßig sind die am Umlenkhebel befindlichen Anlenkstellen für die Zylinder-Kolbeneinheit und die Ausstellstange in einem kleinen Abstand voneinander angeordnet. Um den Betätigungsmechanismus klemmungsfrei betätigen zu können, sollten alle Lager- und Gelenkachsen des Betätigungsmechanismus parallel zur Ausstellachse des zugehörigen Stützauslegers ausgerichtet sein.

Aufgrund der Kinematik des erfindungsgemäßen Betätigungsmechanismus würde eine konstante Druckölzufuhr zur Zylinder-Kolbeneinheit zu einer ungleichförmigen Winkelgeschwindigkeit beim Ausschwenken der vorderen Stützbeine führen. Insbesondere käme es zu Beginn eines jeden Ausstellvorgangs von der Transportstellung der Stützausleger aus schon bei einem kleinen Verstellweg der Zylinder-Kolbeneinheit zu einem relativ großen Schwenkweg des Stützauslegers. Um dies zu vermeiden, wird gemäß einer bevorzugten Ausgestaltung der Erfindung vorgeschlagen, dass die Druckölzufuhr zur Zylinder-Kolbeneinheit in Abhängigkeit von der Winkelstellung des zugehörigen vorderen Stützauslegers oder Umlenkhebels veränderbar ist. Vorteilhafterweise erfolgt dies automatisch dadurch, dass in einer Druckmittelzuführleitung zur Zylinder-Kolbeneinheit ein Drosselventil angeordnet ist, das über ein in einer definierten Winkelstellung des Stützauslegers oder des Umlenkhebels ansprechendes Schaltorgan umsteuerbar ist.

Um sowohl eine Normalabstützung als auch eine Schmalabstützung der Stützausleger zu ermöglichen, weisen die Stützausleger in einer ersten, eine Normalstellung definierenden Abstützstellung, einen lösbaren Anschlag und in einer zweiten Abstützstellung einen Endanschlag auf.

Gemäß einer bevorzugten Ausgestaltung der Erfindung ist die Arbeitsmaschine als Betonpumpe ausgebildet, die ein auf dem Sattelaufleger angeordnetes Pumpaggregat mit Materialaufgabebehälter sowie eine an den Druckausgang des Pumpaggregats angeschlossene, über einen Verteilermast geführte Förderleitung aufweist.

Die als Betonpumpe ausgebildete Arbeitsmaschine und die Stützausleger der Stützkonstruktion samt Betätigungsmechanismus sind zweckmäßig an mindestens einem Aufbaurahmen angeordnet, der mit einem den Sattelaufleger bildenden Chassis verbunden ist. Auf dem Aufbaurahmen ist vorteilhafterweise ein vom Antrieb der Zugmaschine unabhängiger Verbrennungsmotor für den Antrieb der zur Betonpumpe gehörenden Hydraulikaggregate angeordnet.

Im Folgenden wird die Erfindung anhand eines in der Zeichnung in schematischer Weise dargestellten Ausführungsbeispiels näher erläutert. Es zeigen
- Fig. 1: eine schaubildliche Darstellung einer fahrbaren Betonpumpe im Zustand der Straßenfahrt mit eingeschwenkten Stützbeinen und zusammengeklapptem Verteilermast;
- Fig. 2a: eine Draufsicht auf den vorderen Teil der fahrbaren Betonpumpe mit abgenommenem Verteilermast und eingeschwenkten vorderen Stützbeinen;
- Fig. 2b: eine schaubildliche Darstellung des vorderen Teils der fahrbaren Betonpumpe nach Fig. 1 mit ausgeschwenkten vorderen Stützbeinen;
- Fig. 3a bis c: eine schaubildliche Darstellung, eine Stirnseitenansicht und eine Draufsicht des vorderen Teils des Sattelauflegers mit eingeschwenkten Stützbeinen;
- Fig. 4a und b: eine ausschnittsweise stirnseitige Vorderansicht und Untenansicht des Sattelauflegers mit einem in Normalstellung ausgeschwenkten vorderen Stützbein jeweils in schaubildlicher Darstellung;
- Fig. 5a und b: Darstellungen entsprechend Fig. 4a und b mit einem in Schmalabstützposition ausgeschwenkten vorderen Stützbein;
- Fig. 6a: eine ausschnittsweise schaubildliche Darstellung der Sattelzugmaschine mit Hilfsrahmen und Hubmechanismus;
- Fig. 6b: eine Seitenansicht der Sattelkupplung der SattelzugBetonpumpe in teilweise geschnittener Darstellung;
- Fig. 7a und b: eine Seitenansicht und eine Schnittdarstellung des Hubmechanismus gemäß Fig. 6a;

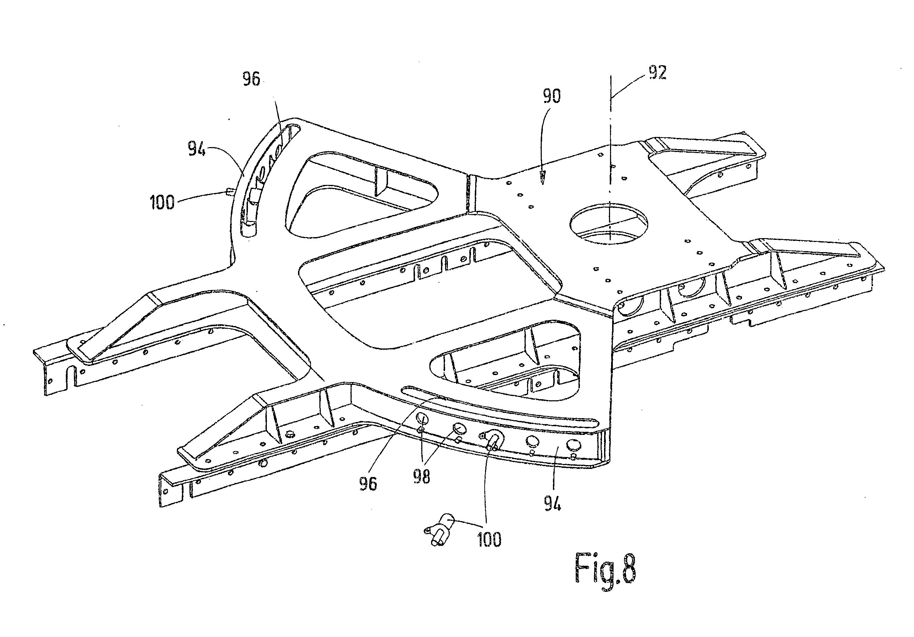

- Fig. 8: eine schaubildliche Darstellung des von der Zugmaschine abgenommenen Hilfsrahmens.

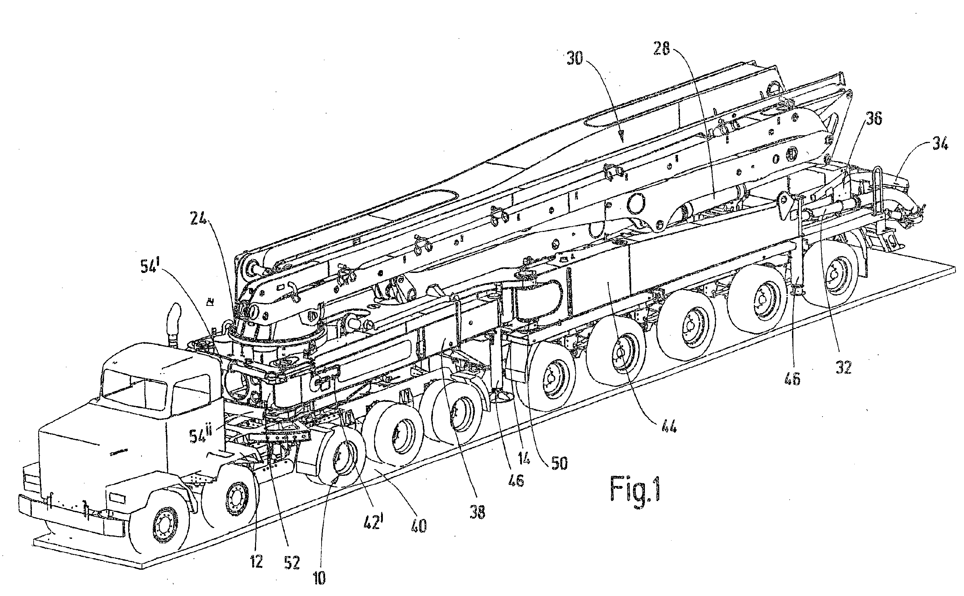

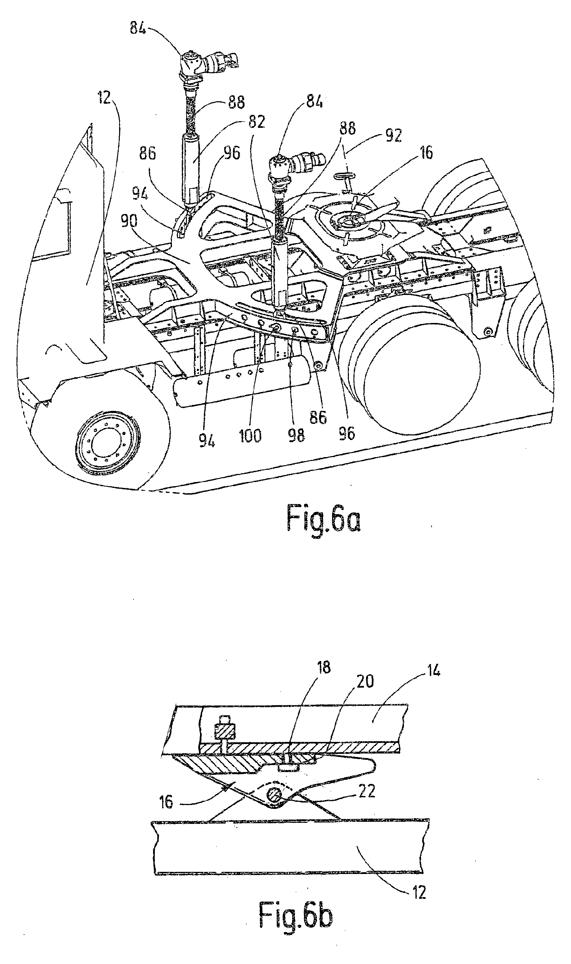

Die in Fig. 1 dargestellte fahrbare Arbeitsmaschine ist als Autobetonpumpe ausgebildet, die ein als Sattelzug ausgebildetes Fahrgestell 10 bestehend aus einer fünfachsigen Zugmaschine 12 und einem fünfachsigen Sattelaufleger 14 aufweist. Die Zugmaschine 12 ist über eine an sich bekannte Sattelkupplung 16 mit den Königszapfen 18 des Sattelauflegers 14 lösbar verbunden (vgl. Fig. 6b). Der Riegel 20 sorgt dafür, dass sowohl eine vertikale als auch eine horizontale Kraftübertragung über die Kupplung möglich ist und dass die Zugmaschine 12 dennoch um die vertikale Achse des Königszapfens 18 gegenüber dem Sattelaufleger 14 verschwenkt werden kann. Das zusätzlich an der Sattelkupplung 16 vorgesehene Drehlager 22 erlaubt eine Nickbewegung der Zugmaschine 12 um eine horizontale Querachse gegenüber dem Sattelaufleger 14.

Auf dem Sattelaufleger 14 ist im vorderen Bereich ein an einem Drehturm 24 angelenkter und mit diesem mittels eines Zahnradgetriebes 26 um eine vertikale Achse motorisch drehbarer, mit hydraulischen Mitteln 28 auseinanderklappbarer Verteilermast 30 angeordnet, dessen Betonleitung 32 über einen Materialaufgabebehälter 34 und ein Pumpaggregat 36 mit dem zu fördernden Flüssigbeton beaufschlagbar ist.

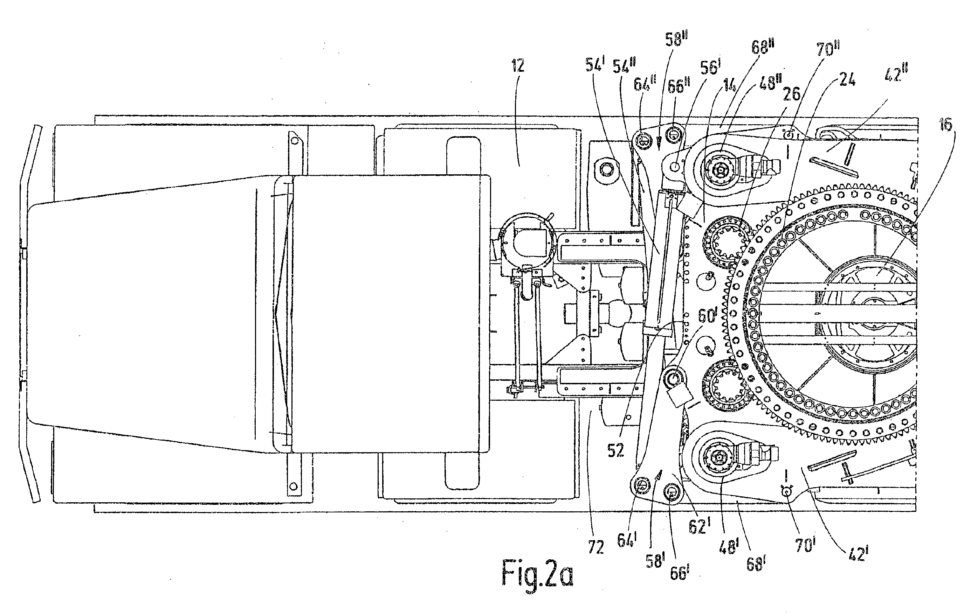

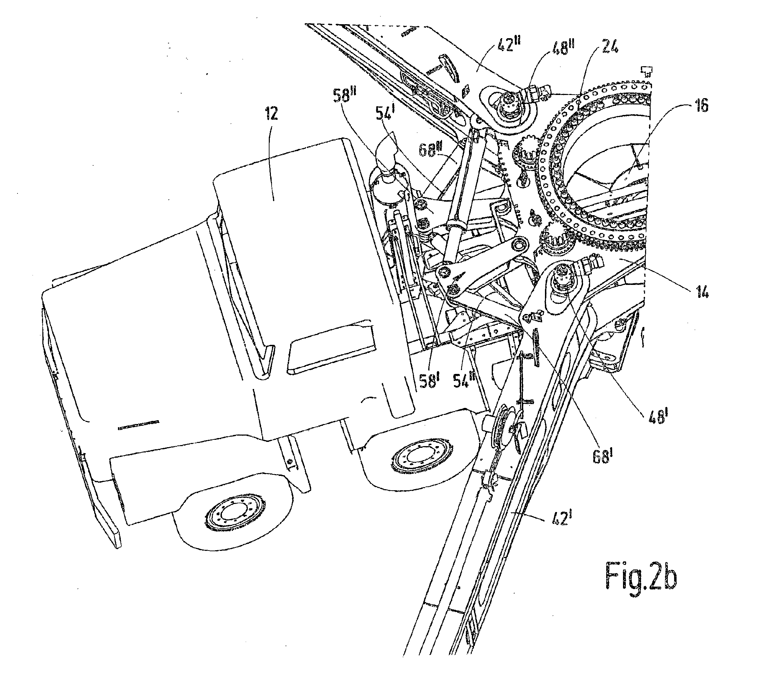

Im Bereich des Sattelauflegers 14 ist eine Stützkonstruktion 38 angeordnet, die unter Anheben des gesamten Sattelzugs auf einem Untergrund 40 abstützbar ist. Die Stützkonstruktion 38 weist zwei vordere Stützausleger 42', 42" und zwei rückwärtige Stützausleger 44 auf, die mittels je eines am freien Auslegerende nach unten weisenden, teleskopierbaren Stützfußes 46 auf dem Untergrund 40 abstützbar sind. Die vorderen Stützausleger 42', 42" sind an zwei am zugmaschinenseitigen Ende des Sattelauflegers 14 symmetrisch zur Fahrgestelllängsachse angeordneten Lagerstellen 48', 48" zwischen einer zur Fahrgestelllängsachse parallelen Transportstellung (Fig. 2a) und mindestens einer Abstützstellung (Fig. 2b) verschwenkbar, während die rückwärtigen Stützausleger 44 an im mittleren Bereich des Sattelauflegers 14 angeordneten rückwärtigen Lagerstellen 50 zwischen einer Transportstellung und mindestens einer seitlich ausgeschwenkten Abstützstellung verschwenkbar sind. Das Ausstellen der vorderen und rückwärtigen Stützausleger erfolgt mit hydraulischen Mitteln unter Verwendung je eines Hydrozylinders und eines geeigneten Umlenkgetriebes.

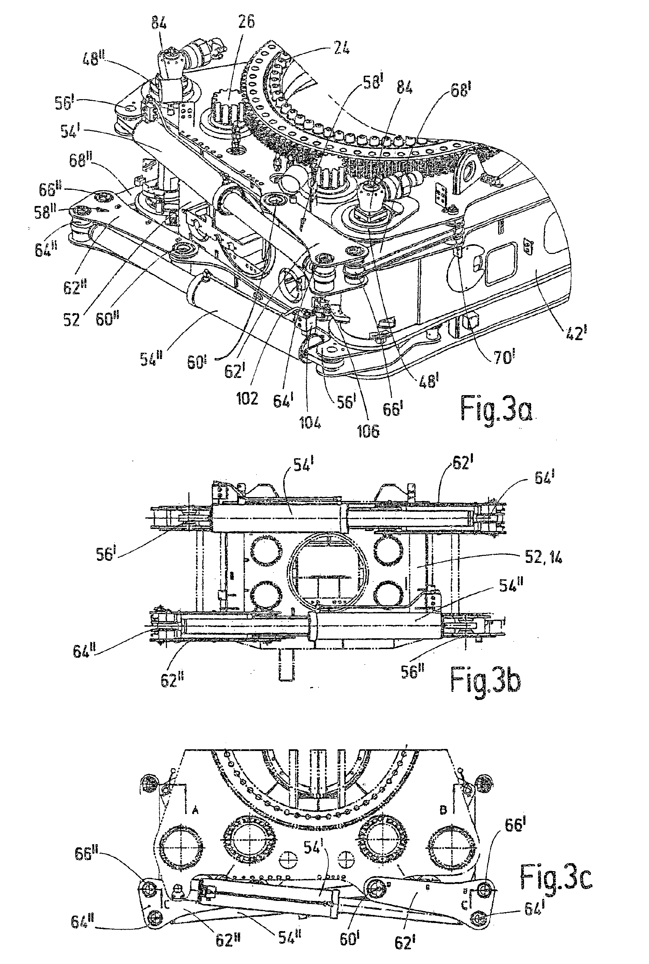

Eine Besonderheit der Erfindung besteht darin, dass der Betätigungsmechanismus eines jeden vorderen Stützauslegers 42', 42" eine sich über die Stirnseitenpartie 52 des Sattelauflegers 14 erstreckende, als Hydrozylinder ausgebildete Zylinder-Kolbeneinheit 54', 54" aufweist, die an ihrem einen Ende unmittelbar an einem sattelauflegerfesten Lagerauge 56', 56" und an ihrem anderen Ende mittelbar über ein Umlenkgetriebe 58', 58" am zugehörigen vorderen Stützausleger 42', 42" angelenkt ist. Wie insbesondere aus Fig. 3a bis c zu ersehen ist, sind die den beiden vorderen Stützauslegern 42', 42" zugeordneten Zylinder-Kolbeneinheiten 54', 54" im Bereich der Stirnseitenpartie 52 des Sattelauflegers 14 nach einander entgegengesetzten Seiten weisend übereinander angeordnet, wobei die sattelauflegerfesten Lageraugen 56', 56" der den beiden vorderen Stützauslegern 42', 42" zugeordneten Zylinder-Kolbeneinheiten 54', 54" in der Nähe der Lagerstelle 48", 48' des jeweils anderen vorderen Stützauslegers 42", 42' angeordnet sind. Das dem Betätigungsmechanismus eines jeden vorderen Stützauslegers 42', 42" zugeordnete Umlenkgetriebe 58', 58" weist einen mit seinem einen Ende an einem sattelauflegerfesten Gelenk 60', 60" um eine zur Ausstellachse im Bereich der Lagerstellen 48', 48" des zugehörigen Stützauslegers parallele Gelenkachse verschwenkbaren Umlenkhebel 62', 62" auf, der an seinem anderen Ende jeweils zwei Anlenkstellen 64', 66' bzw. 64", 66" aufweist. An den Anlenkstellen 64', 64" ist jeweils das zweite Ende der Zylinder-Kolbeneinheit 54', 54" angelenkt, während an der anderen Anlenkstelle 66', 66" das eine Ende einer starren Ausstellstange 68', 68" angelenkt ist, wobei die Ausstellstangen 68', 68" mit ihrem anderen Ende an einem im Abstand von der Lagerstelle 48', 48" befindlichen Anlenkstelle 70', 70" des zugehörigen vorderen Stützauslegers 42', 42" angelenkt sind. Die Anlenkstellen 64', 66' bzw. 64", 66" sind jeweils im Abstand voneinander am Umlenkhebel 62' bzw. 62" angeordnet. Die Kinematik der Betätigungsmechanismen für die vorderen Stützausleger 42', 42" lässt sich am besten anhand der Fig. 3a bis c, 4a und b sowie 5a und b erläutern. In der Transportstellung gemäß Fig.3a bis c weisen die vorderen Stützausleger 42', 42" parallel zur Fahrgestelllängsachse nach hinten und liegen dort gegen die Seitenflanken des Sattelauflegers 14 an. In dieser Stellung befinden sich die Zylinder-Kolbeneinheiten 54', 54" in ihrer ausgefahrenen Endstellung, so dass sie mit dem zugehörigen Umlenkhebel 62', 62" ihren kleinsten Winkel einschließen, während die Ausstellstangen 68', 68" ihren größten Winkeln mit dem Umlenkhebel 62', 62" einschließen.

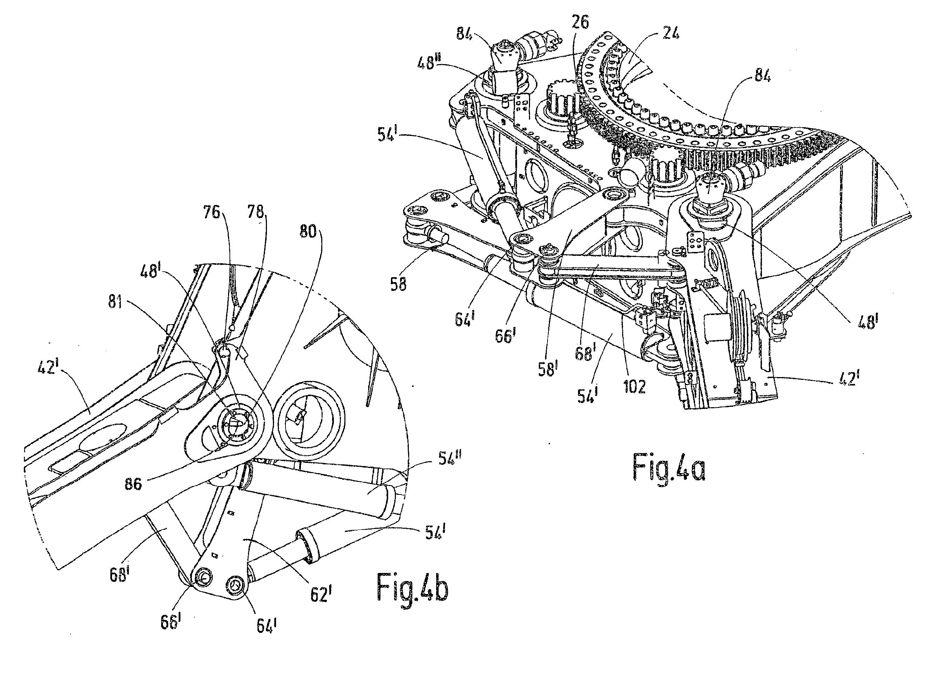

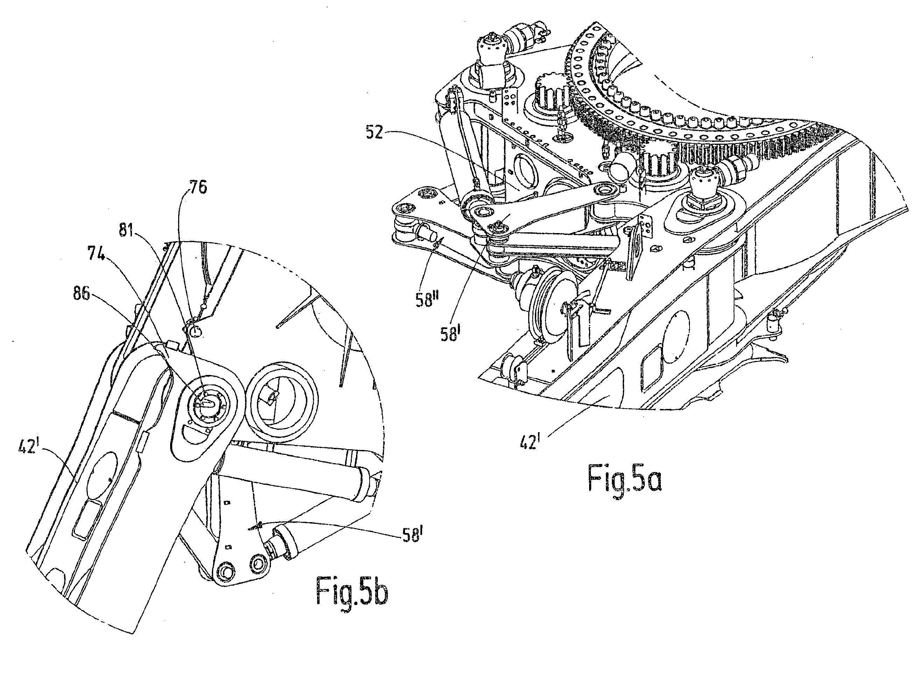

Im Zuge des Ausstellvorgangs wird die Zylinder-Kolbeneinheit 54' durch Einziehen der Kolbenstange verkürzt. Gleichzeitig wird hierbei der zugehörige Umlenkhebel 62' nach vorne in den Freiraum 72 zwischen dem Sattelaufleger 14 und der Zugmaschine 12 verschwenkt, so dass der vordere Stützausleger 42' über die Ausstellstange 68' seitlich nach außen geschwenkt wird. In der in Fig. 4a und b gezeigten Schwenklage hat der Stützausleger 42' eine erste Abstützposition erreicht, die der so genannten Normalabstützung entspricht. In dieser Position schlägt der Stützausleger 42' mit einem Anschlagarm 74 gegen einen fahrgestellfesten Anschlag 76 an. Wie aus Fig. 4a und b zu ersehen ist, ist die Zylinder-Kolbeneinheit 54' in dieser Position noch nicht vollständig eingefahren. Dementsprechend lässt sich von der Position gemäß Fig. 4a und b aus durch weitere Verkürzung der Zylinder-Kolbeneinheit 54' eine zusätzliche Abstützposition gemäß Fig. 5a und b anfahren, bei der das vordere Stützbein 42' eng zur Zugmaschine 12 herangeschwenkt wird. Es handelt sich hierbei um die so genannte Schmalabstützung, die für enge Aufstellräume gewählt werden kann. Um diese Abstützposition zu erreichen, muss zuvor der Anschlag 76 von Hand gelöst werden, damit er von dem Anschlagarm 74 überfahren werden kann (vgl. Fig. 5b). In der Schmalabstützung gelangt die Zylinder-Kolbeneinheit 54' in ihre eingefahrene Endlage, während der Umlenkhebel 62' zusammen mit der Ausstellstange 68' noch weiter in den Freiraum 72 hineingeschwenkt wird und diesen in seiner Weite nahezu vollständig nutzen. Eine entsprechende Kinematik ergibt sich auch für den Stützausleger 42" und dessen Betätigungsmechanismus.

Aufgrund der Kinematik des Betätigungsmechanismus würde eine konstante Druckölzufuhr zur Zylinder-Kolbeneinheit 54', 54" zu einer ungleichförmigen Winkelgeschwindigkeit beim Ausschwenken der vorderen Stützbeine 42', 42" führen. Um dies zu vermeiden, wird die Druckölzufuhr zur Zylinder-Kolbeneinheit 54', 54" in Abhängigkeit von der Winkelstellung des zugehörigen vorderen Stützauslegers 42', 42" oder des Umlenkhebels 62', 62" variiert. Dies erfolgt beispielsweise dadurch, dass in einer Druckmittelzuführleitung 102 zur Zylinder-Kolbeneinheit 54', 54" ein Drosselventil 104 angeordnet ist, das über ein in einer definierten Winkelstellung des Stützauslegers 42', 42" ansprechendes Schaltorgan 106 ansteuerbar ist.

Um eine sichere Abstützung zu gewährleisten, werden die vorderen und rückwärtigen Stützausleger der Stützkonstruktion 38 nacheinander in ihre Abstützstellung gebracht und dort gesichert. Dies erfolgt mit Hilfe einer vom Bediener betätigten Fernbedienung.

Die vorstehend beschriebenen, die Betonpumpe und die Stützkonstruktion betreffenden Aufbauten befinden sich zweckmäßig an mindestens einem Aufbaurahmen, der in teilweise vormontiertem Zustand auf das Chassis des Sattelauflegers aufgesetzt und mit diesem verbunden wird.

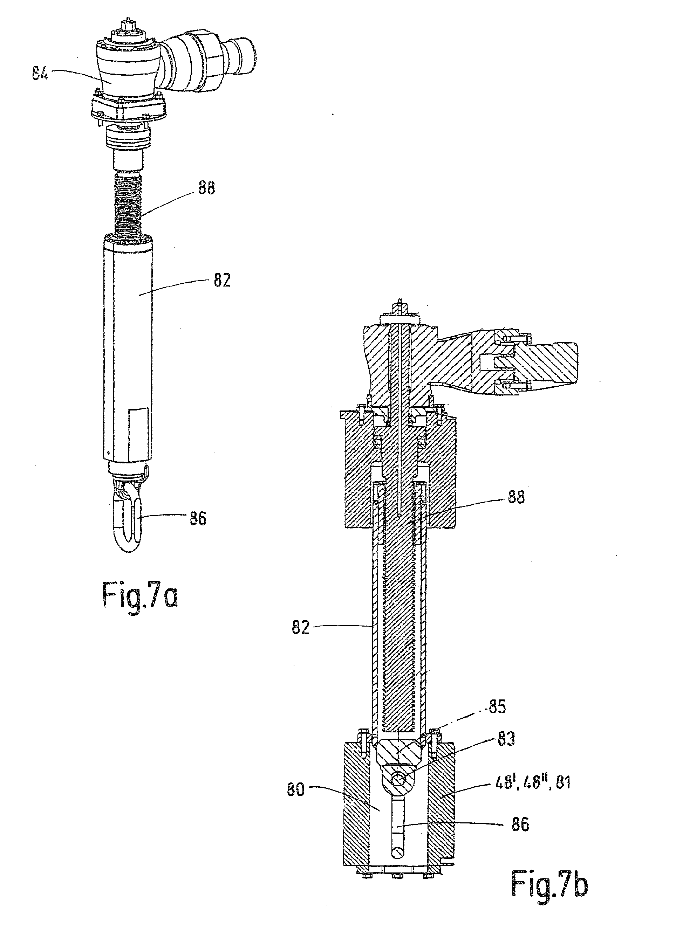

Eine Besonderheit der einen Sattelzug als Fahrgestell 10 aufweisenden fahrbaren Arbeitsmaschine besteht darin, dass die Zugmaschine 12 und der Sattelaufleger 14 über die Sattelkupplung 16 in mehreren Freiheitsgraden gegeneinander verschwenkt werden können. Da andererseits das Gewicht der Zugmaschine 12 vor allem bei Betonpumpen mit großen Verteilermasten 30 in der angehobenen Stellung als Ballastgewicht zur Stabilisierung des mit den Stützauslegern 42', 42", 44 auf dem Untergrund 40 abgestützten Sattelauflegers 14 benötigt wird, bedarf es zusätzlicher Vorkehrungen. Diese bestehen vor allem darin, dass der Sattelaufleger 14 besondere Mittel zum Anheben und Festhalten der Zugmaschine 12 aufweist. Um den Platzbedarf für diese Mittel so klein wie möglich zu halten, besteht eine Besonderheit der Erfindung darin, dass die Lagerstellen 48', 48" der vorderen Stützausleger 42', 42" einen achszentralen durchgehenden Hohlraum 80 aufweisen und dass die am Sattelaufleger 14 angeordneten Mittel zum Anheben und Festhalten der Zugmaschine 12 je ein durch den zentralen Hohlraum 80 der Lagerstelle 48', 48" von oben nach unten hindurchgreifendes, an der Zugmaschine 12 fixierbares Hubglied 82 aufweisen. Der Hohlraum 80 befindet sich dabei zweckmäßig in einem stützauslegerfesten Lagerzapfen 81. Die Hubglieder 82 sind mittels je eines Hydromotors 84 relativ zum Sattelaufleger 14 heb- und senkbar angeordnet und tragen an ihrem unteren Ende ein Kupplungsorgan 86. Die Hubglieder 82 ihrerseits sind über je einen Gewindetrieb 88, dessen Gewindepartien als Trapezgewinde ausgebildet sind, mit dem zugehörigen Hydromotor 84 gekoppelt. Wie insbesondere aus Fig. 7a und b zu ersehen ist, ist das Kupplungsorgan 86 als am unteren Ende des Hubglieds 82 angelenkter Ovalring ausgebildet, der gegenüber dem Hubglied 82 um dessen Längsachse verdrehbar und um eine Querachse 83 verschwenkbar ist.

Um die Hubglieder 82 mit ihren Kupplungsorganen 86 in der Abstützstellung mit der Zugmaschine 12 verbinden zu können, weist die Zugmaschine 12 einen Hilfsrahmen 90 auf, der zwei teilkreisförmige, zur Hochachse 92 des Königszapfens 18 konzentrische Segmente 94 aufweist, die ihrerseits mit entsprechend teilkreisförmig gebogenen, nach oben offenen Langlöchern 96 und mit seitlichen, im Rasterabstand voneinander angeordneten, als Löcher 98, ausgebildeten Arretierungsstellen versehen sind. Die Kupplung der Hubglieder 82 mit der Zugmaschine 12 erfolgt dadurch, dass die als Ovalringe ausgebildeten Kupplungsorgane 86 durch jeweils eines der Langlöcher 96 in das zugehörige Segment 94 des Hilfsrahmens 90 eingeführt und an einer der Arretierungsstellen 98 mit einem Steckbolzen 100 am Hilfsrahmen 90 fixiert werden. Mit diesen Maßnahmen ist es möglich, die Zugmaschine 12 unter verschiedenen Drehwinkeln um die Hochachse 92 mit dem Sattelaufleger 14 zu kuppeln. Dies hat sich als besonders vorteilhaft erwiesen, weil beim Aufstellen eines Sattelzugs an einer Abstützposition die Zugmaschine 12 nicht stets parallel zum Sattelaufleger 14 ausgerichtet sein wird. In der gekuppelten Stellung bilden die Hubglieder 82 und die Sattelkupplung 16 ein Verbindungsdreieck, das dafür sorgt, dass bei der Abstützung des Sattelauflegers 14 über die Stützkonstruktion alle Räder der Zugmaschine 12 vom Untergrund 40 abgehoben werden.

Im Fahrzustand werden die Hubglieder 82 über die Hydromotoren 84 nach dem Entfernen der Steckbolzen 100 so weit angehoben, dass die Kupplungsorgane 86 in den Hohlraum 80 zurückgezogen sind (Fig. 7b). In diesem Zustand sind die Zugmaschine 12 und der Sattelaufleger 14 in den Freiheitsgraden der Sattelkupplung 16 gegeneinander beweglich.

Zusammenfassend ist folgendes festzuhalten: Die Erfindung bezieht sich auf eine fahrbare Arbeitsmaschine, insbesondere eine Autobetonpumpe, mit einem als Sattelzug ausgebildeten Fahrgestell 10. Der Sattelzug weist eine Zugmaschine 12 und einen mit dieser mittels einer Sattelkupplung 16 verbundenen, die Arbeitsmaschine tragenden mehrachsigen Sattelaufleger 14 auf. Im Bereich des Sattelauflegers 14 befindet sich eine unter Anheben des Sattelzugs auf einem Untergrund 40 abstützbare Stützkonstruktion 38. Die Stützkonstruktion 38 umfasst zwei vordere Stützausleger 42', 42" und zwei rückwärtige Stützausleger 44, die jeweils zwischen einer Transportstellung und mindestens einer Abstützstellung gegenüber dem Sattelaufleger verschwenkbar sind. Weiter sind am Sattelaufleger 14 Mittel zum Anheben und Festhalten der Zugmaschine 12 angeordnet, so dass die Zugmaschine 12 in der Abstützstellung ein Ballastgewicht zur Stabilisierung des mit der Stützkonstruktion 38 auf dem Untergrund 40 abgestützten Sattelauflegers 14 bildet. Die Erfindung sieht vor, dass der Betätigungsmechanismus eines jeden vorderen Stützauslegers 42', 42" eine sich über eine Stirnseitenpartie 52 des Sattelauflegers 14 erstreckende, als Hydrozylinder ausgebildete Zylinder-Kolbeneinheit 54', 54" aufweist, die an ihrem einen Ende unmittelbar an einem sattelauflegerfesten Lagerauge 56', 56" und an ihrem anderen Ende mittelbar über ein Umlenkgetriebe 58', 58" an dem zugehörigen Stützausleger 42', 42" angelenkt ist.

## Patentansprüche

1. Fahrbare Arbeitsmaschine mit einem als Sattelzug ausgebildeten, eine mehrachsige Zugmaschine (12) und einen mit dieser mittels einer Sattelkupplung (16) verbundenen, die Arbeitsmaschine tragenden mehrachsigen Sattelaufleger (14) aufweisenden Fahrgestell (10), mit einer im Bereich des Sattelauflegers (14) angeordneten, unter Anheben des Sattelzugs auf einem Untergrund abstützbaren Stützkonstruktion (38), die zwei an am zugmaschinenseitigen Ende des Sattelauflegers (14) zur Fahrgestelllängsachse symmetrisch angeordneten Lagerstellen (48', 48") zwischen einer Transportstellung und mindestens einer Abstützstellung mittels je eines hydraulisch angetriebenen Betätigungsmechanismus verschwenkbare vordere Stützausleger (42', 42") und zwei zwischen einer Transportstellung und mindestens einer Abstützstellung verschwenkbare rückwärtige Stützausleger (44) aufweist, wobei der Sattelaufleger (14) Mittel zum Anheben und Festhalten der Zugmaschine (12) aufweist, **dadurch gekennzeichnet, dass** der Betätigungsmechanismus eines jeden vorderen Stützauslegers (42', 42") eine sich über eine Stirnseitenpartie (52) des Sattelauflegers (14) erstreckende, als Hydrozylinder ausgebildete Zylinder-Kolbeneinheit (54', 54") aufweist, die an ihrem einen Ende unmittelbar an einem sattelauflegerfesten Lagerauge (56', 56") und an ihrem anderen Ende mittelbar über ein Umlenkgetriebe (58', 58") an dem zugehörigen Stützausleger (42', 42") angelenkt ist, und dass die den beiden vorderen Stützauslegern (42', 42") zugeordneten Zylinder-Kolbeneinheiten (54', 54") an der Stirnseite (52) des Sattelauflegers (14) nach einander entgegengesetzten Seiten weisend übereinander angeordnet sind.

2. Fahrbare Arbeitsmaschine nach Anspruch 1, **dadurch gekennzeichnet, dass** die sattelauflegerfesten Lageraugen (56', 56") der den beiden vorderen Stützauslegern (42', 42") zugeordneten Zylinder-Kolbeneinheiten (54', 54") auf der dem jeweils anderen vorderen Stützausleger (42", 42') zugewandten Seite des Sattelauflegers (14) angeordnet sind.

3. Fahrbare Arbeitsmaschine nach Anspruch 2, **dadurch gekennzeichnet, dass** die sattelauflegerfesten Lageraugen (56', 56") der den beiden vorderen Stützauslegern (42', 42") zugeordneten Zylinder-Kolbeneinheiten (54', 54") in der Nähe der Lagerstelle (48", 48') des jeweils anderen vorderen Stützauslegers (42", 42') angeordnet sind.

4. Fahrbare Arbeitsmaschine nach einem der Ansprüche 1 bis3, **dadurch gekennzeichnet, dass** das dem Betätigungsmechanismus eines jeden vorderen Stützauslegers (42', 42") zugeordnete Umlenkgetriebe (58', 58") einen mit seinem einen Ende an einem sattelauflegerfesten Gelenk (60', 60") um eine zur Ausstellachse des zugehörigen Stützauslegers (42', 42") parallele Gelenkachse verschwenkbaren Umlenkhebel (62', 62") aufweist, der an seinem anderen Ende Anlenkstellen (64', 64"; 66' 66") aufweist, an denen die Zylinder-Kolbeneinheit (54', 54") sowie das eine Ende einer starren Ausstellstange (68', 68") angelenkt ist, wobei die Ausstellstange (68', 68") mit ihrem anderen Ende an einem im Abstand von der Lagerstelle (48', 48") befindlichen Anlenkstelle (70', 70") des Stützauslegers (42', 42") angelenkt ist.

5. Fahrbare Arbeitsmaschine nach Anspruch 4, **dadurch gekennzeichnet, dass** die am anderen Ende des Umlenkhebels (62', 62") befindliche Anlenkstellen (64', 66'; 64", 66") für die Zylinder-Kolbeneinheit (54', 54") und für die Ausstellstange (68', 68") im Abstand voneinander angeordnet sind.

6. Fahrbare Arbeitsmaschine nach einem Ansprüche 1 bis 5, **dadurch gekennzeichnet, dass** alle Lager- und Gelenkachsen des Betätigungsmechanismus parallel zur Ausstellachse des zugehörigen Stützauslegers (42', 42") ausgerichtet sind.

7. Fahrbare Arbeitsmaschine nach einem der Ansprüche 1 bis 6, **dadurch gekennzeichnet, dass** die vorderen Stützausleger (42', 42") in einer ersten Abstützstellung gegen einen lösbaren Anschlag (76) und in einer zweiten Abstützstellung gegen einen Endanschlag anliegen.

8. Fahrbare Arbeitsmaschine nach einem der Ansprüche 1 bis 7, **dadurch gekennzeichnet, dass** die die Stützkonstruktion (38) bildenden Stützausleger (42', 42"; 44) und die Arbeitsmaschine an mindestens einem mit dem Sattelaufleger (14) starr verbundenen Aufbaurahmen angeordnet sind.

9. Fahrbare Arbeitsmaschine nach einem der Ansprüche 1 bis 8, **dadurch gekennzeichnet, dass** die Arbeitsmaschine als Betonpumpe ausgebildet ist, die ein auf dem Sattelaufleger (14) oder dem Aufbaurahmen angeordnetes Pumpaggregat (36) mit Materialaufgabebehälter (34) sowie eine an den Druckausgang des Pumpaggregats (36) angeschlossene, über einen Verteilermast (30) geführte Förderleitung (32) aufweist.

10. Fahrbare Arbeitsmaschine nach einem der Ansprüche 1 bis 9, **dadurch gekennzeichnet, dass** die Druckmittelzufuhr zu den Zylinder-Kolbeneinheiten (54', 54") in Abhängigkeit von der Winkelstellung des zugehörigen vorderen Stützauslegers (42', 42") oder Umlenkhebels (62', 62") veränderlich ist.

11. Fahrbare Arbeitsmaschine nach Anspruch 10, **dadurch gekennzeichnet, dass** in einer Druckmittelzuführleitung (102) zur Zylinder-Kolbeneinheit (54', 54") ein Drosselventil (104) angeordnet ist, das über ein in einer definierten Winkelstellung des Stützauslegers (42', 42") oder des Umlenkhebels (62', 62") auslösbares Schaltorgan (106) umsteuerbar ist.

## Claims

1. Mobile work machine having a chassis (10) that is designed as a tractor-trailer, a multi-axle tractor unit (12) and a multi-axle semi-trailer (14) that carries the work machine and is connected with the tractor unit by means of a fifth-wheel coupling (16), having a support construction (38) that is disposed in the region of the semi-trailer (14) and can be supported on a surface, raising the tractor-trailer, which construction has two front support booms (42', 42") disposed at bearing locations (48', 48") on the tractor unit end of the semi-trailer (14), symmetrical to the longitudinal chassis axis, which can be pivoted between a transport position and at least one support position, by means of a hydraulically driven activation mechanism, in each instance, and two rear support booms (44) that can be pivoted between a transport position and at least one support position, whereby the semi-trailer (14) has means for raising and holding the tractor unit (12) in place, **characterized in that** the activation mechanism of each front support boom (42', 42") has a cylinder/piston unit (54', 54") configured as a hydrocylinder, which extends beyond the face part (52) of the semi-trailer (14), which unit is articulated, at its one end, directly with a bearing eye (56', 56") that is fixed in place on the semi-trailer, and, at its other end, indirectly with the related support boom (42', 42"), by way of a deflection gear mechanism (58', 58") and that the cylinder/piston units (54', 54") assigned to the two front support booms (42', 42") are disposed one above the other, on the face (52) of the semi-trailer (14), facing toward opposite sides.

2. Mobile work machine according to claim 1, **characterized in that** the bearing eyes (56', 56") of the cylinder/piston units (54', 54") assigned to the two front support booms (42', 42"), which eyes are fixed in place on the semi-trailer, are disposed on the side of the semi-trailer (14) that faces the other front support boom (42", 42'), in each instance.

3. Mobile work machine according to claim 2, **characterized in that** the bearing eyes (56', 56") of the cylinder/piston units (54', 54") assigned to the two front support booms (42', 42"), which eyes are fixed in place on the semi-trailer, are disposed in the vicinity of the bearing location (48", 48') of the other front support boom (42", 42'), in each instance.

4. Mobile work machine according to one of claims 1 to 3, **characterized in that** the deflection gear mechanism (58', 58") assigned to the activation mechanism of each front support boom (42', 42") has a deflection lever (62', 62") that can be pivoted about an articulation axis parallel to the extension axis of the related support boom (42', 42"), on an articulation (60', 60") that is fixed in place on the semi-trailer, with its one end, which lever has articulation locations (64', 64"; 66', 66") at its other end, on which the cylinder/piston unit (54', 54") as well as the one end of a rigid extension rod (68', 68") are articulated, whereby the extension rod (68', 68") is articulated, with its other end, on an articulation location (70', 70") of the support boom (42', 42") disposed at a distance from the bearing location (48', 48").

5. Mobile work machine according to claim 4, **characterized in that** the articulation locations (64', 66'; 64", 66") for the cylinder/piston unit (54', 54") and for the extension rod (68', 68"), which are situated at the other end of the deflection lever (62', 62"), are disposed at a distance from one another.

6. Mobile work machine according to one of claims 1 to 5, **characterized in that** all the bearing and articulation axes of the activation mechanism are oriented parallel to the extension axis of the related support boom (42', 42").

7. Mobile work machine according to one of claims 1 to 6, **characterized in that** the front support booms (42', 42") lie against a releasable stop (76) in a first support position, and against an end stop in a second support position.

8. Mobile work machine according to one of claims 1 to 7, **characterized in that** the support booms (42', 42"; 44) that form the support construction (38), and the work machine, are disposed on at least one superstructure frame rigidly connected with the semi-trailer (14).

9. Mobile work machine according to one of claims 1 to 8, **characterized in that** the work machine is configured as a concrete pump that has a pump unit (36) disposed on the semi-trailer (14) or on the superstructure frame, having a material application container (34) and a feed line (32) that is connected with the pressure output of the pump unit (36), guided by way of a distributor mast (30).

10. Mobile work machine according to one of claims 1 to 9, **characterized in that** the feed of pressure agent to the cylinder/piston unit (54', 54") can be changed as a function of the angular position of the related front support boom (42', 42") or deflection lever (62', 62").

11. Mobile work machine according to claim 10, **characterized in that** a throttle valve (104) is disposed in a pressure agent feed line (102) to the cylinder/piston unit (54', 54"), which valve can be controlled by way of a switching organ (106) that can be switched in a defined angular position of the support boom (42', 42") or of the deflection lever (62', 62").

## Revendications

1. Engin de travail mobile, avec un châssis (10) réalisé sous la forme d'un semi-remorque et présentant un véhicule tracteur (12) à plusieurs essieux et un plateau (14) à plusieurs essieux supportant l'engin de travail et relié au véhicule tracteur au moyen d'une sellette d'attelage (16), avec une structure d'appui (38) disposée dans la région du plateau (14) et pouvant prendre appui sur le sol en soulevant alors le semi-remorque, structure qui présente deux bras d'appui avant (42', 42") qui peuvent pivoter entre une position de transport et au moins une position d'appui, au moyen d'un mécanisme d'actionnement respectif à entraînement hydraulique, en deux points de palier (48', 48") disposés symétriquement par rapport à l'axe longitudinal du châssis à l'extrémité côté véhicule tracteur du plateau (14), et deux bras d'appui arrière (44) qui peuvent pivoter entre une position de transport et au moins une position d'appui, sachant que le plateau (14) présente des moyens pour soulever et immobiliser le véhicule tracteur (12), **caractérisé en ce que** le mécanisme d'actionnement de chaque bras d'appui avant (42', 42") présente un ensemble cylindre-piston (54', 54") réalisé sous la forme d'un vérin hydraulique et s'étendant sur une partie de côté frontal (52) du plateau (14), ensemble qui est articulé par l'une de ses extrémités directement sur un bossage (56', 56") solidaire du plateau et par son autre extrémité indirectement sur le bras d'appui associé (42', 42") par l'intermédiaire d'un mécanisme de renvoi (58', 58"), et **en ce que** les ensembles cylindre-piston (54', 54") associés aux deux bras d'appui avant (42', 42") sont disposés en superposition sur le côté frontal (52) du plateau (14) en étant dirigés vers des côtés opposés.

2. Engin de travail mobile selon la revendication 1, **caractérisé en ce que** les bossages (56', 56") solidaires du plateau des ensembles cylindre-piston (54', 54") associés aux deux bras d'appui avant (42', 42") sont disposés sur le côté du plateau (14) qui est tourné vers l'autre bras d'appui avant respectif (42", 42').

3. Engin de travail mobile selon la revendication 2, **caractérisé en ce que** les bossages (56', 56") solidaires du plateau des ensembles cylindre-piston (54', 54") associés aux deux bras d'appui avant (42', 42") sont disposés dans le voisinage du point de palier (48', 48") de l'autre bras d'appui avant respectif (42", 42').

4. Engin de travail mobile selon l'une des revendications 1 à 3, **caractérisé en ce que** le mécanisme de renvoi (58', 58") associé au mécanisme d'actionnement de chaque bras d'appui avant (42', 42") présente un levier de renvoi (62', 62") pouvant, par l'une de ses extrémités, pivoter au niveau d'une articulation (60', 60") solidaire du plateau autour d'un axe d'articulation parallèle à l'axe de relevage du bras d'appui associé (42', 42"), levier qui présente à son autre extrémité des points d'articulation (64', 64" ; 66', 66") au niveau desquels sont articulés l'ensemble cylindre-piston (54', 54") ainsi que l'une des extrémités d'une barre de relevage rigide (68', 68"), sachant que la barre de relevage (68', 68") est articulée par son autre extrémité en un point d'articulation (70', 70") du bras d'appui (42', 42") qui se trouve à distance du point de palier (48', 48").

5. Engin de travail mobile selon la revendication 4, **caractérisé en ce que** les points d'articulation (64', 64" ; 66', 66") pour l'ensemble cylindre-piston (54', 54") et pour la tige de relevage (68', 68") qui se trouvent à l'autre extrémité du levier de renvoi (62', 62") sont disposés à distance l'un de l'autre.

6. Engin de travail mobile selon l'une des revendications 1 à 5, **caractérisé en ce que** tous les points de palier et d'articulation du mécanisme d'actionnement sont orientés parallèlement à l'axe de relevage du bras d'appui associé (42', 42").

7. Engin de travail mobile selon l'une des revendications 1 à 6, **caractérisé en ce que** les bras d'appui avant (42', 42") s'appliquent dans une première position d'appui contre une butée amovible (76) et dans une deuxième position d'appui contre une butée finale.

8. Engin de travail mobile selon l'une des revendications 1 à 7, **caractérisé en ce que** les bras d'appui (42', 42" ; 44), formant la structure d'appui (38), et l'engin de travail sont disposés sur au moins un cadre porteur rigidement relié au plateau (14).

9. Engin de travail mobile selon l'une des revendications 1 à 8, **caractérisé en ce que** l'engin de travail est réalisé sous la forme d'une pompe à béton qui présente un organe de pompage (36) disposé sur le plateau (14) ou le cadre porteur et doté d'un récipient de chargement de matière (34), ainsi qu'une conduite de transport (32) raccordée à la sortie de pression de l'organe de pompage (36) et dirigée sur un mât distributeur (30).

10. Engin de travail mobile selon l'une des revendications 1 à 9, **caractérisé en ce que** l'apport de fluide hydraulique aux ensembles cylindre-piston (54', 54") est variable en fonction de la position angulaire du bras d'appui avant (42', 42") ou du levier de renvoi (62', 62") associé.

11. Engin de travail mobile selon la revendication 10, **caractérisé en ce qu'**une soupape d'étranglement (104) est disposée dans une conduite d'alimentation en fluide hydraulique (102) menant à l'ensemble cylindre-piston (54', 54"), soupape qui peut être commutée au moyen d'un organe de commutation (106) déclenchable dans une position angulaire définie du bras d'appui (42', 42") ou du levier de renvoi (62', 62").
